# EUROPEAN PATENT APPLICATION

(11) **EP 1 416 407 A1**
(43) Date of publication of application: **06.05.2004**
(21) Application number: 03017475.9
(22) Date of filing: 01.08.2003
(51) Int. Cl.: G06F 17/60

(54) **Estimating forecast value method, system, and program**

(30) Priority: 01.11.2002 JP 2002319248
(71) Applicant: Hitachi, Ltd., Chiyoda-ku, Tokyo 101-8010 (JP)
(72) Inventor: Komaki, Daisuke, Tokyo 100-8220 (JP); Kawakita, Shuichi, Tokyo 100-8220 (JP); Mori, Masakatsu, Tokyo 100-8220 (JP)
(74) Representative: Strehl Schübel-Hopf & Partner

(57) **Abstract**

In a sharing forecast system for forming a forecast by sharing two companies, upon accidentally matching forecast values formed based on different factors by transaction companies, a difference on estimation is found and it can easily be specified, and the forecast values can easily be corrected. Two companies share both a forecast value and basis information obtained by patterning a factor for calculating the forecast value. Upon satisfying criteria that the basis information of the two companies does not match each other, it is determined that there is a different estimation of the forecast value. In the case of the determination, the basis information is presented to the two companies, a recommended value for correcting the forecast value is calculated based on the basis information, and the calculated value is presented to the two companies.

## Description

### BACKGROUND OF THE INVENTION

### Field of the Invention

The present invention relates to a method for forecasting a product demand and, more particularly, to a method for collaboratively forecasting the demand by an order side and a delivery side via a network, typically, e.g., the Internet.

### Description of the Related Art

Recently, supply chain management is widespread whereby processing from the procurement of materials to the delivery of products becomes efficient and stocks are reduced by sharing stock information and sales performance of different companies. In particular, CPFR (Collaborative Planning, Forecasting and Replenishment) attracts attention, in which a production plan and an ordering plan are optimized, the stockout rate is reduced, inventories are reduced, and sales are increased by sharing forecasts such as volume of sales between companies. The CPFR is prescribed by VICS (Voluntary Interindustry Commerce Standards).

In the conventional CPFR system, a sales company for selling a product and a purchase company for buying the product form forecast values such as the volume of sales and the order quantity, and register them to a forecast sharing server. Here, the volume of sales denotes the quantity of products sold to another company and personals by the purchase company, and the order quantity denotes the quantity of products ordered to the sales company by the purchase company.

Next, when the forecast value matches exception criteria to find an improper forecast value, the forecast sharing server determines the forecast value as an exception and sends a notification indicating the forecast value as the exception to the sales company and the purchase company. According to the exception criteria, for example, the forecast value of the registered sales company is compared with that of the registered purchase company and the difference or ratio between the forecast values is over a threshold which is previously set by the registered sales company and the registered purchase company. The sales company and the purchase company which receive the notification find out the cause of the exception by mutual consultation, and correct the forecast values.

Japanese Unexamined Patent Application Publication No. 5-173602.

A conventional CPFR system has the following problems because the exception criteria are applied to only the forecast value as a target so as to determine the exception.

That is, first, when the forecast values formed based on individual factors by the sales company and the purchase company do not accidentally match the exception criteria, the forecast values are not determined as the exception. For example, it is assumed that the purchase company plans the sale 50% off of a products having the average volume of sales of 100 and, then, forecasts the volume of sales as 150 products larger than the usual volume of sales by 50% and, on the other hand, the sales company further forecasts the sale on magazines and forecasts the volume of sales as the 150 products. Actually, there is a possibility that the volume of sales is larger by 50% under synergy effect of both the 50% off-sale and the featuring on the magazine. This phenomenon should be notified to both the sales company and the purchase company. However, since the forecast values of the sales company and the purchase company are not over the threshold, they are not determined as the exception.

Secondarily, when the forecast values of the sales company and the purchase company are determined as the exception, the reason of the exception is not determined. Therefore, a person responsible for the forecast of the sales company and a person responsible for the forecast of the purchase company must consult and find out the reason. For example, it is assumed that the purchase company sells off, by 50%, 100 products as the average volume of sales, then, it forecasts the volume of sales as 150 products, 50% larger than the usual volume of sales and, on the other hand, the sales company forecasts the volume of sales as 100 products as usual. In this case, although the exception is generated, both the sales company and the purchase company can refer to only the 150 or 100 products as the forecast values and cannot determine the basis for calculation of the forecast values. Thus, only the consultation to the person responsible for the forecast of the partner company enables the correction of the forecast values.

Thirdly, the forecast value must be recalculated and be corrected based on the found reason. In the above-described case, it is assumed that the non-recognition of the 50% off-sale of the sales company causes the generation of the exception as a result of the consultation of the sales company with the purchase company. In this case, an in-house system or the person responsible must calculate again and correct the forecast value in consideration of the 50% off-sale.

### SUMMARY OF THE INVENTION

Accordingly, it is one object of the present invention to provide a method for determining an exception so as to detect the different estimation of a future demand which is not conventionally found because the forecast values for the demand accidentally match each other.

It'is another object of the present invention to easily specify an exception factor when the exception is determined.

It is another object of the present invention to easily correct the forecast value.

In order to accomplish the above objects, in a system for connecting a sales company terminal and a purchase company terminal to a forecast sharing server via the Internet, not only the forecast value but also basis information obtained by patterning a factor for calculating the forecast value is shared, an exception is determined in accordance with the following processing routine, and recommended values for correction of the forecast value and the basis information are calculated.

First, the basis information and the importance indicating, as a number, the degree of importance of the basis information are defined and registered to the forecast sharing server. For example, "sale 50% off" and "magazine feature" are defined as the basis information.

The sales company and the purchase company register, to the forecast sharing server, exception criteria of the forecast value for determining the exception based on the forecast values thereof, exception criteria of the basis information for determining the exception based on the basis information thereof, a recommended forecast value calculating method as a method for calculating a recommended value of the forecast value when the exception is determined, and a recommended basis information calculating method as a method for calculating a correct value of the basis information. For example, "forecast value of sales company - forecast value of purchase company < threshold" is defined as the exception criteria of the forecast value. For example, "basis information of sales company ⊂ basis information of purchase company" is defined as the exception criteria of the basis information. Further, "match forecast value of sales company to forecast value of purchase company" is defined as the recommended forecast value calculating method. In addition, "match basis information of sales company to basis information of purchase company" is defined as the recommended basis information calculating method.

Next, the sales company and the purchase company register the formed forecast values and the basis information to the forecast sharing server.

The forecast sharing server first determines whether or not the forecast values of the sales company and the purchase company match the exception criteria of the forecast value. If it is determined that the forecast values match the exception criteria, the forecast sharing server determines the forecast values as the exception. Further, if it is determined that the basis information of the sales company and the purchase company matches, the exception criteria of the basis information, the forecast sharing server determine the basis information as the exception. Upon determining the exception of the basis information, the basis information used for the determination is designated depending on the importance, such as the determination of the exception using only the basis information with a special importance or more.

When any of the forecast value and the basis information is determined as the exception, the recommended forecast value and the recommended basis information are calculated and notified to a user in accordance with the following processing routine.

First, the recommended forecast value is calculated from the forecast values of the sales company and the purchase company based on the recommended forecast value calculating method. Next, the recommended basis information is calculated from the basis information of the sales company and the purchase company based on the recommended basis information calculating method. Upon calculating the recommended basis information, the basis information can be designated depending on the importance, for example, the recommended basis information is calculated by use of only the basis information with a special importance or more.

After that, the forecast sharing server sends a notification indicating the exception, the recommended forecast value, and the recommended basis information to the sales company and the purchase company. The forecast sharing server may automatically correct the forecast value and the basis information based on the recommended forecast value and the recommended basis information before notification.

### BRIEF DESCRIPTION OF THE DRAWINGS

Fig. 1 is a diagram showing the structure of a forecast value estimating system and the flow of processing thereof according to an embodiment of the present invention;.
Fig. 2 is a diagram showing a screen for setting exception criteria and a recommended value calculating method according to the embodiment of the present invention;
Fig. 3 is a flowchart for processing for determining exception, processing for calculating a recommended value, and processing for automatic correction;
Fig. 4 is a flowchart for the processing for determining the exception according to the embodiment of the present invention;
Fig. 5 is a diagram showing a screen for exception according to the embodiment of the present invention;
Fig. 6 is a table for the forecast value and basis information according to the embodiment of the present invention;
Fig. 7 is a table for defining the basis information according to the embodiment of the present invention;
Fig. 8 is a table for the exception criteria and the recommended value calculating method according to the embodiment of the present invention;
Fig. 9 is a table for the exception; the recommended forecast value, and the recommended basis information according to the embodiment of the present invention;
Fig. 10 is a diagram showing a screen for notification to a sales company according to the embodiment of the present invention;
Fig. 11 is a diagram showing a screen for notification to a purchase company according to the embodiment of the present invention;
Fig. 12 is a flowchart for processing for notification according to the embodiment of the present invention;
Fig. 13 is a table for a company according to the embodiment of the present invention;
Fig. 14 is a diagram showing one screen for exception according to the embodiment of the present invention; and
Fig. 15 is a diagram showing another screen for exception according to the embodiment of the present invention.

### DESCRIPTION OF THE PREFERRED EMBODIMENTS

Hereinbelow, a detailed description is given of an embodiment of the present invention with reference to the drawings.

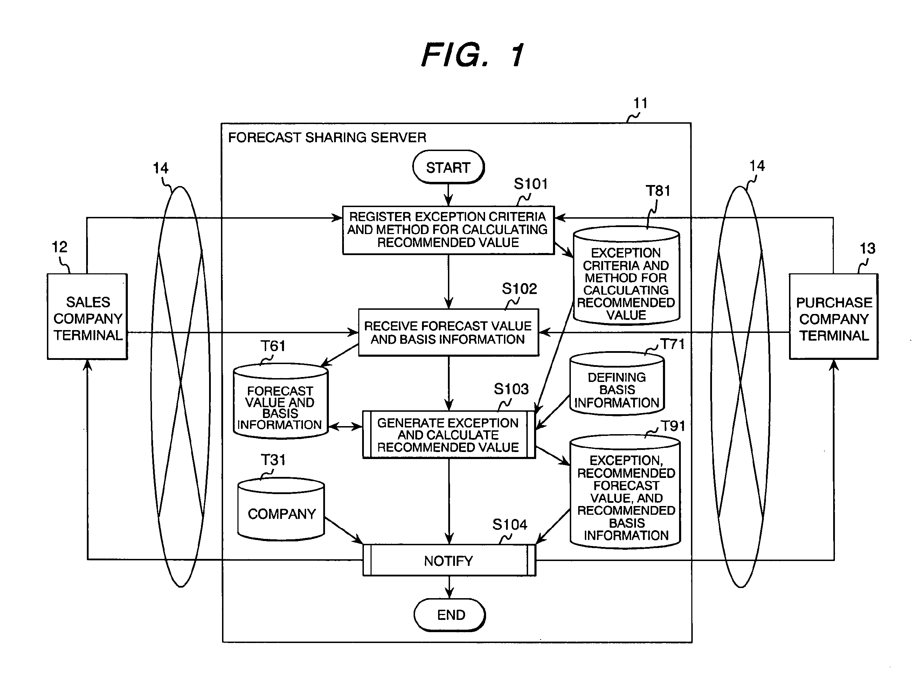

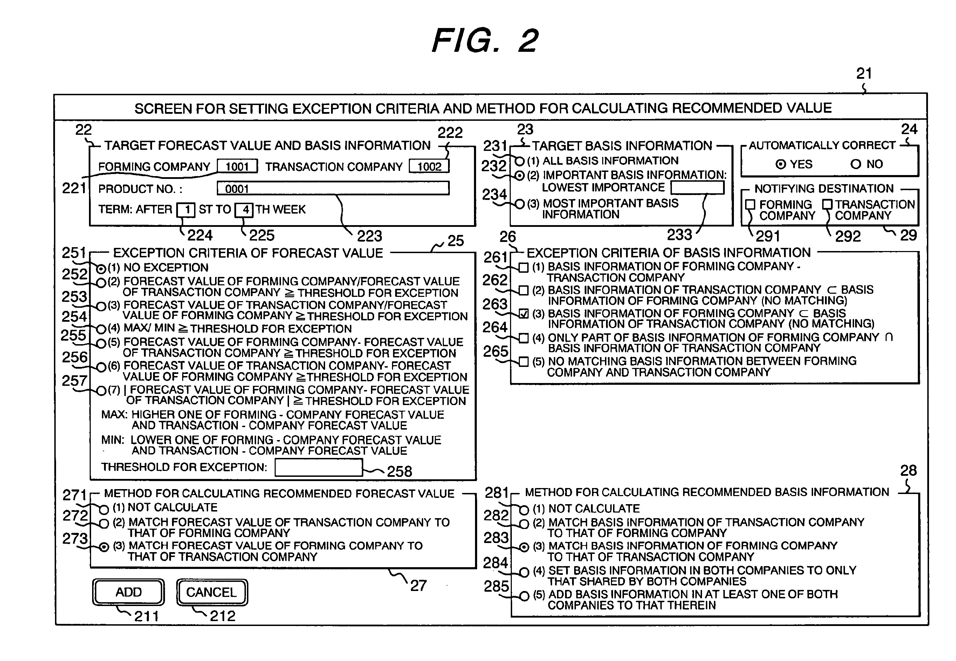

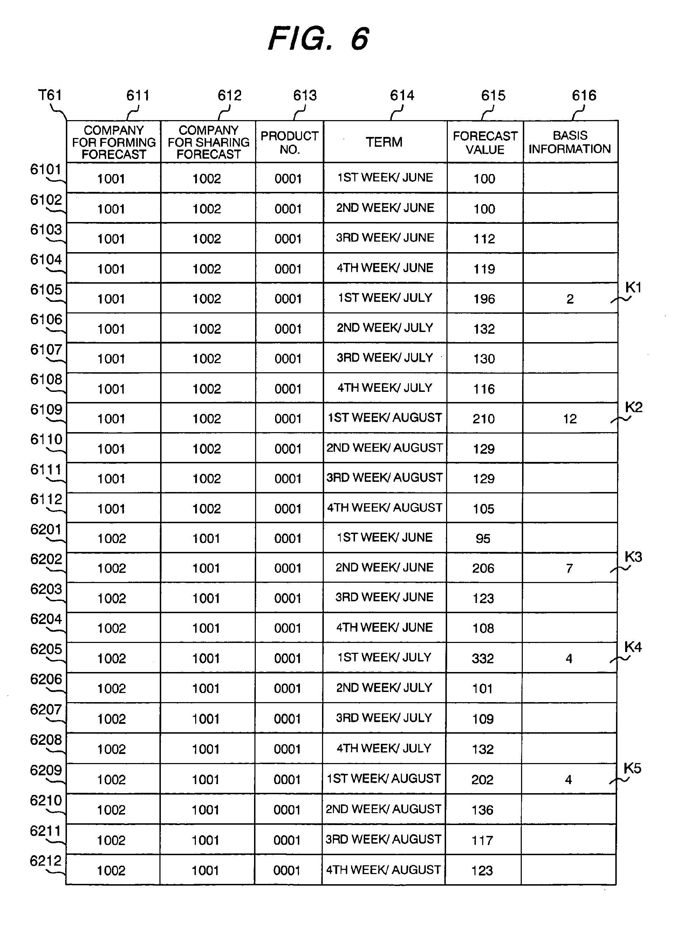

Figs. 1, 3, 4, and 12 show flowcharts of processing according to the embodiment. Figs. 2, 5, 10, 11, 14, and 15 show screens according to the embodiment. Figs. 6 to 9 and 13 show tables according to the embodiment.

First, a description is given of the entire structure of a forecast sharing system shown in Fig. 1.

The forecast sharing system comprises: a forecast sharing server 11; a sales company terminal 12; a purchase company terminal 13; and a communication network 14 for connecting the abovementioned components. The communication network 14 is the Internet, LAN, or communication network using arbitrary wiring or radio waves.

The forecast sharing server 11 is an information processing device such as a workstation arranged to the sales company, the purchase company, or another company. The forecast sharing server 11 has a function for receiving a forecast value, basis information, exception criteria, a recommended forecast value calculating method, and a recommended basis information calculating method transmitted from the sales company terminal 12 or the purchase company terminal 13, which will be described later. Further, the forecast sharing server 11 has functions for determining the exception, for calculating the recommended forecast value, and the recommended basis information, which will be described later, based on the received information, for correcting the forecast value and the basis information, and for transmitting the correction result to the sales company terminal 12 and the purchase company terminal 13.

The sales company terminal 12 is an information processing device, such as a personal computer, arranged to the sales company, etc. The sales company terminal 12 has a function for transmitting, to the forecast sharing server 11, the forecast value and the basis information calculated by a person responsible or an in-house system in the sales company, which will be described later, a function for transmitting, to the forecast sharing server 11, the exception criteria, the recommended forecast value calculating method, and the recommended basis information calculating method determined by the person responsible in the sales company, which will be described later, and a function for displaying the exception, the recommended forecast value, and the recommended basis information transmitted from the forecast sharing server 11, which will be described later.

The purchase company terminal 13 is an information processing device, such as a personal computer, arranged to the purchase company, etc. The purchase company terminal 13 has a function for transmitting, to the forecast sharing server 11, the forecast value and the basis information calculated by a person responsible or an in-house system in the purchase company, which will be described later, a function for transmitting, to the forecast sharing server 11, the exception criteria, the recommended forecast value calculating method, and the recommended basis information calculating method determined by the person responsible in the purchase company, which will be described later, and a function for displaying the exception, the recommended forecast value, and the recommended basis information transmitted from the forecast sharing server 11, which will be described later.

According to the embodiment, the forecast sharing server 11, the sales company terminal 12, and the purchase company terminal 13 comprise the three individual information processing devices. However, the forecast sharing server 11 may comprise the same information processing device as that of the sales company terminal 12 or the purchase company terminal 13.

The abovementioned forecast value is a forecast in a specific index on a product sold to the purchase company by the sales company. The index includes a sales forecast as the amount of products sold to a company or person by the purchase company and an ordering forecast as the amount of products purchased from the sales company by the purchase company. The sales company and the purchase company independently form one forecast value for the same index per combination of product type and term.

The term denotes an arbitrary fixing time period such as one day, one week, or one month. It is assumed that one week as one term includes a first week/June, a second week/June, a third week/June, and the like. The sales company and the sales company form the forecast values and the basis information, which will be described later, in accordance with the same definition of term.

The abovementioned basis information is obtained by patterning events of special sales and advertisement which influence on the forecast value. The used basis information is pervasively defined by the sales company and the purchase company, and is stored in the forecast sharing server 11. The sales company and the purchase company independently form at least one piece of the basis information per combination of product type and term.

In the abovementioned exception, the forecast values or basis information independently formed by the sales company and the purchase company match the exception criteria, and are determined by the forecast sharing server 11. The exception criteria are formed by the sales company and the purchase company independently or collaboratively, and are a rule for determining the difference in forecast values or the difference in basis information. For example, the exception criteria correspond to an unallowable range of the difference in forecast values formed by the sales company and the purchase company or to a situation in which the basis information of the sales company and the purchase company does not match each other. The exception criteria will be described later.

According to the recommended forecast value calculating method and the recommended basis information calculating method, the recommended values are calculated to correct the forecast value and the basis information determined as the exceptions. The recommended forecast calculating method and the recommended basis information calculating method are set by the sales company and the purchase company independently or collaboratively and are registered in the forecast sharing server 11. The forecast sharing server 11 forms the recommended forecast value and the recommended basis information from the forecast value and the basis information based on the setting. The recommended forecast value and the recommended basis information are collectively referred to as a recommended value. The recommended forecast value calculating method and the recommended basis information calculating method are collectively referred to as a recommended value calculating method.

The processing flow is described according to the embodiment with reference to Fig. 1.

First, in step S101, the forecast sharing server 11 receives the exception criteria and the recommended value calculating method transmitted from the sales company terminal 12 and the purchase company terminal 13, and stores them in a table T81 for the exception criteria and the recommended value calculating method.

In step S102, the forecast sharing server 11 receives the forecast value and the basis information transmitted from the sales company terminal 12 and the purchase company terminal 13 and stores them in a table T61 for the forecast value and the basis information.

In step S103, the forecast sharing server 11 determines the exception based on information in the table T81 for the exception criteria and the recommended value calculating method, a table T71 for defining the basis information, and the table T61 for the forecast value and the basis information, calculates the recommended forecast value and the recommended basis information, and stores the calculation results to a table T91 for the exception, the recommended forecast value, and the recommended basis information.

Finally, in step S104, the forecast sharing server 11 sends a notification indicating the exception, the recommended forecast value, and the recommended basis information to the sales company terminal 12 and the purchase company terminal 13 based on the information in the table T91 for the exception, the recommended forecast value, and the recommended basis information. The information is notified by email and a transmitting destination address is obtained from a table T31 for company.

Hereinbelow, the above methods are described with reference to the drawings.

First, a description is given of the method for registering the exception criteria and the recommended value calculating method (step S101).

The sales company terminal 12 or the purchase company terminal 13 accesses the forecast sharing server 11, thereby displaying, on a www browser, a screen 21 for setting the exception criteria and the recommended value calculating method as shown in Fig. 2. On this screen 21, one exception criterion and one recommended value calculating method are set by input information in a setting index, which will be described later.

On the screen 21 for setting the exception criteria and the recommended value calculating method, the forecast value and the basis information are designated in a box 22 for a target forecast value and basis information, as application targets of the exception criteria and the recommended value calculating method set thereon. Further, a forming company number for forming the exception criteria and the recommended value calculating method is set in a field 221 for the forming company, and a transaction company number of the forming company is set on a field 222 for the transaction company. The field 221 for the forming company and the field 222 for the transaction company are designated by use of a company number 311 in the table T31 for the company, which will be described later. Furthermore, a product number for identifying the type of product is set in a field 223 for a product number. A range of a target term is set in a field 224 and a field 225. It is designated on the field 224 which week is set as the start of term after a processing date for searching the exception. It is designated on the field 225 which week is set as the end of term after the processing date for searching the exception. The description of 1 and 4 in Fig. 2 mean that when the processing date for searching the exception is the fourth week in May, the term for determining the exceptions for the forecast value and the basis information is from the first week in July, as a week after one week from the fourth week in May, to the fourth week in June, as a week after four weeks from the first week in June. Although the relative term range is designated, the term may directly be designated, such as a term from the first to fourth weeks in June.

The exception criteria of the forecast value is set in a box 25 for the exception criteria of the forecast value. The exception criteria are set by selecting any of radio buttons 251 to 257. When the radio button 251 is selected, the forecast value is not applied to the determination of the exception. When any of the radio buttons 252 to 257 is selected, the exception criteria is set to determine the exception when the forecast value of the forming company and the forecast value of the transaction company match any of relations described on the right of the radio buttons. A threshold for the exception as a right side of the relations is set in a field 258 for the threshold for exception.

The basis information is designated in a box 23 for the target basis information, as targets for determining the exception and for calculating the recommended value. The basis information is designated by selecting any of radio buttons 231 to 234. The selection of the radio button 231 causes all the basis information to become the target. The selection of the radio button 232 causes only the basis information having the importance higher than that set in a field 233 for the lowest importance to become the target. The selection of the radio button 234 causes only a plurality of pieces of the basis information limited by the target term and product number with the highest importance to become the targets of the determination of exception and the calculation of recommended basis information among the plurality of the basis information, upon determining the exception of the basis information and calculating the recommended value. In addition to the target basis information shown here, the target basis information may be designated by conditions of "target basis information including that with the first to n-th (n: arbitrary natural number) importance", "target basis information including that with the importance lower by n from the highest importance", "target basis information including that with the lowest importance", and "target basis information including that with the importance x (x: arbitrary importance) or lower".

The exception criteria of the basis information is set to a box 26 for the exception criteria of the basis information. The exception criteria are set by selecting check boxes 261 to 265. A plurality of check boxes can be simultaneously selected from the check boxes 261 to 265. When the basis information matches any of the selected criteria and then it is determined as the exception, it is set as the exception criteria. When no check box is selected, the basis information is not applied to the determination of the exception.

The method for calculating the recommended forecast value is set to a box 27 for the recommended forecast value calculating method, upon determining the exception. The recommended forecast value is set by selecting one of radio buttons 271 to 273. In addition to the methods shown in the radio buttons 271 to 273, the recommended forecast value may be calculated by methods of "match forecast values of both companies to larger one", "match forecast values of both companies to smaller one", and "match forecast values of both companies to the average forecast value".

Upon determining the exception, the method for calculating the recommended basis information is set to a box 28 for the recommended basis information calculating method. The recommended basis information is set by selecting one of radio boxes 281 to 285.

It is set to a box 24 for automatic correction, whether or not the forecast value and the basis information are automatically corrected by use of the recommended forecast value and the recommended basis information calculated by the recommended forecast value calculating method and the recommended basis information calculating method.

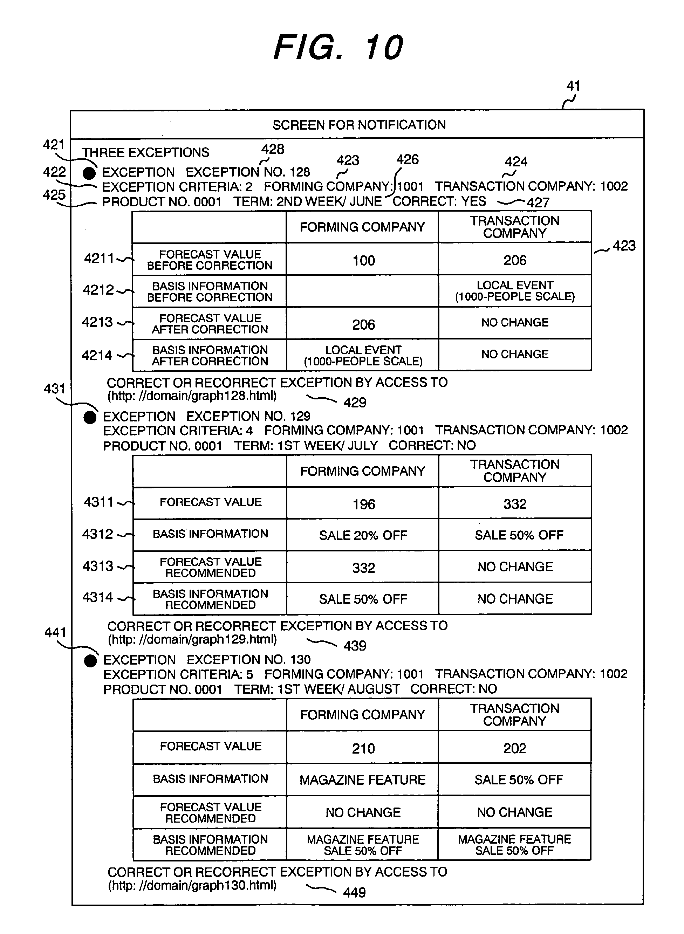

It is set to a box 29 for notification, whether or not a screen 41 for notification shown in Fig. 10 is transmitted to the forming company and the transaction company.

After setting the fields on the screen 21 for setting the exception criteria and the recommended value calculating method, the pressing operation of an add button 211 causes the exception criteria and the recommended value calculating method to additionally be registered to the table T81 for the exception criteria and recommended value calculating method. The pressing operation of a cancel button 212 causes the closing and ending operation of the screen 21 for setting the exception criteria and the recommended value calculating method, without registering the exception criteria and the recommended value calculating method.

The exception criteria and the recommended value calculating method are registered by using the screen 21 for setting the exception criteria and the recommended value calculating method. However, the setting contents may be registered to the table T81 for the exception criteria and the recommended value calculating method by receiving described files by the forecast sharing server 11 from the sales company terminal 12 or the purchase company terminal 13.

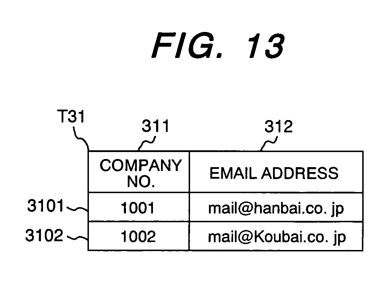

Here, a description is given of the table T31 for company for storing information on the companies which share the forecast with reference to Fig. 13. Information on one company is stored in one row in the table T13 for company. The table T31 for company stores the company number 311 as an identification number of the company and an email address 312. After that, a column for designating the company in the tables stores the company number 311 defined by the table T13 for company.

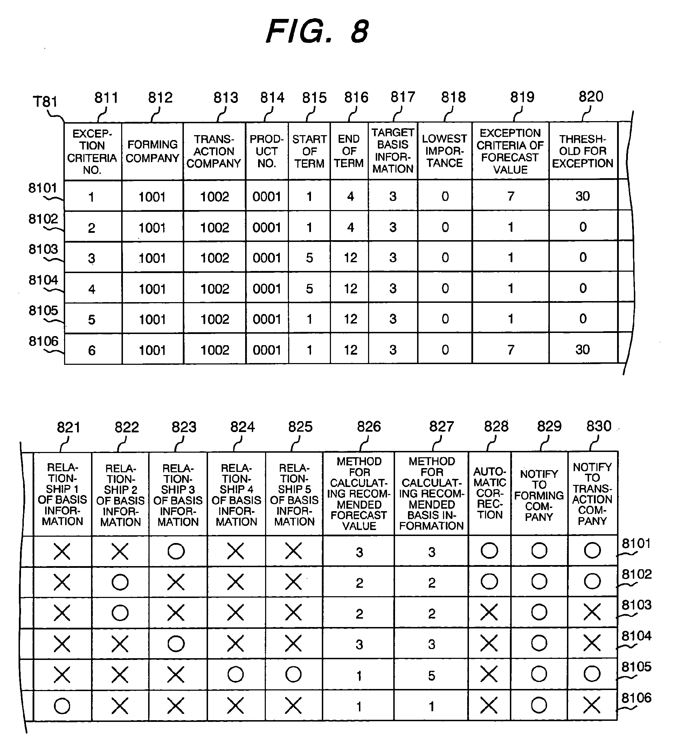

Next, a description is given of the table T81 for the exception criteria and the recommended calculating method with reference to Fig. 8.

The table T81 for the exception criteria and the recommended value calculating method stores, every row, one exception criterion and one recommended value calculating methods set on the screen 21 for setting the exception criteria and the recommended value calculating method.

An identification number of the criteria number formed by the forecast sharing server 11 is stored in a column for an exception criteria number 811. Data in the field 221 for the forming company is stored in a column for a forming company 812. Data in the field 222 for the transaction company is stored in a column for a transaction company 813. Data in the field 223 for the product number is stored in a column for a product number 814. Data in the field 224 is stored in a column for a start of term 815. Data in the field 225 is stored in a column for an end of term 816.

A number in parentheses described to the right of the selected one of the radio buttons 231 to 234 is stored in a column for a target basis information 817. Data in the field 233 for the lowest importance is stored in a column for a lowest importance 818. A number in parentheses described to the right of the selected one of the radio buttons 251 to 257 is stored in a column for an exception criteria 819 of the forecast value. Data in the field 258 for the threshold for the exception is stored in a column for a threshold 820 for the exception. Symbols "o" and "x" are stored in a column for a basis information relation 1 (821) upon selecting "YES" and "NO" in the box 261, respectively. Similarly, Symbols "o" and "×" are stored in columns for basis information relations 2 to 5 (822 to 825) upon selecting "YES" and "NO" in the boxes 262 to 265, respectively. A number in parentheses described to the right of the selected one of the radio buttons 271 to 273 is stored in a column for a recommended forecast value calculating method 826. A number in parentheses described to the right of the selected one of the radio buttons 281 to 285 is stored in a column for a recommended basis information calculating method 827. Symbols "o" and "x" are stored in a column for automatic correction 828 upon selecting "YES" and "NO" in the box 24 for the automatic correction, respectively. Symbols "o" and "×" are stored in a column for notification 829 to the forming company in the case of the selection and the non-selection of the check boxes 291, respectively. Symbols "o" and "×" are stored in a column for notification 830 to the transaction company in the case of the selection and the non-selection of the check boxes 292, respectively.

Referring to Fig. 2, the setting is displayed on the screen 21 for setting the exception criteria and the recommended value calculating method. Upon pressing the add button 211, data in a row 8101 is stored in the table T81 for the exception criteria and the recommended calculating method.

Next, a description is given of the forecast value and the basis information which are received by the forecast sharing server 11 in the processing for receiving the forecast value and the basis information (step S102).

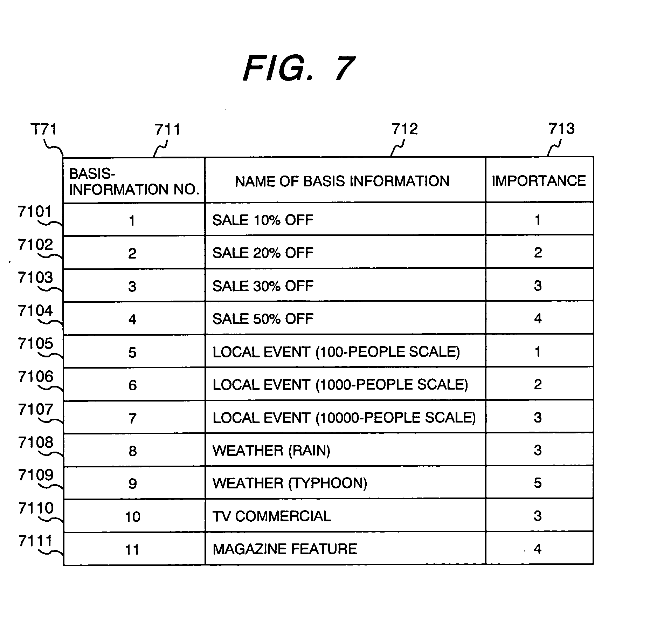

First, a description is given of the table T71 for defining the basis information for storing the definition of the basis information with the reference to Fig. 7.

The table T71 for defining the basis information stores the definition of single basis information per row. The table T71 for defining the basis information stores a basis information number 711 as an identification number of the basis information, a basis information name 712, and an importance 713, as contents for defining the basis information. The basis information number 711 defined by the table T71 for defining the basis information is stored in the basis information in the tables, and a plurality of pieces of the basis information are stored with the basis information number 711 which is partitioned by using comma (,) from the basis information. The basis information name 712 is displayed to the basis information on a screen 51 for the exception, a screen 41 for notification, and a screen 45 for notification.

Next, the table T61 for the forecast value and the basis information will be described with reference to Fig. 6.

The table T61 for the forecast value and the basis information stores a forecast forming company 611 as the company for forming the forecast, a forecast sharing company 612 as a company for sharing the forecast, a product number 613, a term 614, a forecast value 615; and basis information 616.

For example, the sales company (company No. 1001) forms a forecast value 196 of the product (product No. 0001) which is treated to the purchase company (company No. 1002) in the first week on July. Further, the sales company (company No. 1001) forms the basis information indicating "sale 20% off" (basis information No. 2). Upon transmitting the formed forecast value and basis information from the sales company terminal 12 to the forecast sharing server 11, the forecast sharing server 11 stores them on a row 6105 as shown in Fig. 6.

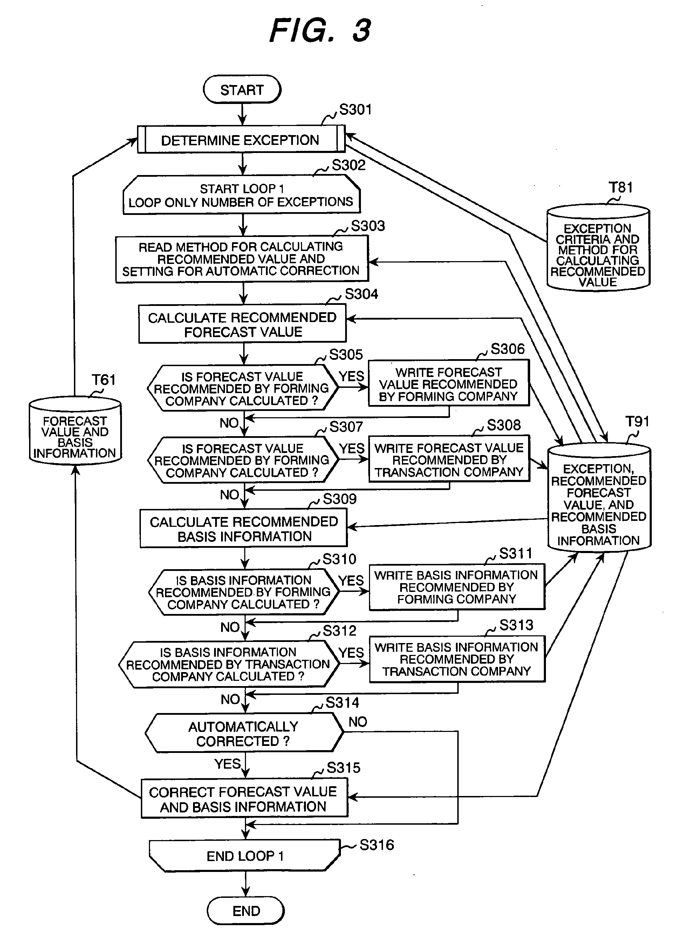

Next, a description is given of the processing for determining the exception and calculating the recommended value (step S103) with reference to the flowchart shown in Fig. 3.

In step S301, the forecast sharing server 11 determines the exception according to a method as will be described later, and writes the exceptions to the table T91 for the exception, the recommended forecast value, and the recommended basis information. For the exceptions in the table T91 for the exception, the recommended forecast value, and the recommended basis information written in step S301, the processing in steps S302 to S316 is repeatedly executed. In step S303, the forecast sharing server 11 reads the recommended forecast value calculating method 826, the recommended basis information calculating method 827, and the automatic correction 828, as the exception criteria and the recommended value calculating method of the same exception criteria number 811 in the table T81 for the exception criteria and the recommended value calculating method as the exception criteria number 912 in the table T91 for the exception, the recommended forecast value, and the recommended basis information.

In step S304, the recommended forecast value is calculated based on the recommended forecast value calculating method 826 read in step S303. In step S305, it is determined whether or not the forecast value recommended by the forming company 812 is calculated. If YES in step S305, the processing routine shifts to step S306. If NO in step S305, the processing routine shifts to step S307. In step S306, the forecast value recommended by the forming company is written to the table T91 for the exception, the recommended forecast value, and the recommended basis information, and the processing routine shifts to step S307 whereupon it is determined whether or not the forecast value recommended by the transaction company 813 is calculated in step S304. If YES in step S307, the processing routine shifts to step S308. If NO in step S307, the processing routine shifts to step S309. In step S308, the forecast value recommended by the transaction company is written to the table T91 for the exception, the recommended forecast value, and the recommended basis information and, after the end of writing, the processing routine shifts to step S309.

In step S309, the recommended basis information is calculated based on the recommended basis information calculating method 827. In step S310, it is determined whether or not the basis information recommended by the forming company 812 is calculated. If YES in step S310, the processing routine shifts to step S311. If NO in step S310, the processing routine shifts to step S312. In step S311, the basis information recommended by the forming company is written to the table T91 for the exception, the recommended forecast value, and the recommended basis information and, after the end of writing, the processing routine shifts to step S312. In step S312, it is determined whether or not the basis information recommended by the transaction company is calculated in step S309. If YES in step S312, the processing routine shifts to step S313. If NO in step S313, the processing routine shifts to step S314. In step S313, the basis information recommended by the transaction company is written to the table T91 for the exception, the recommended forecast value, and the recommended basis information and, after the end of writing, the processing routine shifts to step S314.

In step S314, it is determined whether or not the automatic correction is performed based on the automatic correction 828 read in step S303. If YES in step S314, the processing routine shifts to step S315. If NO in step S314, the processing routine shifts to step S316. In step S315, the forecast value and the basis information are overwritten as the correction targets in the table T61 for the forecast value and the basis information, with the recommended forecast value and the recommended basis information.

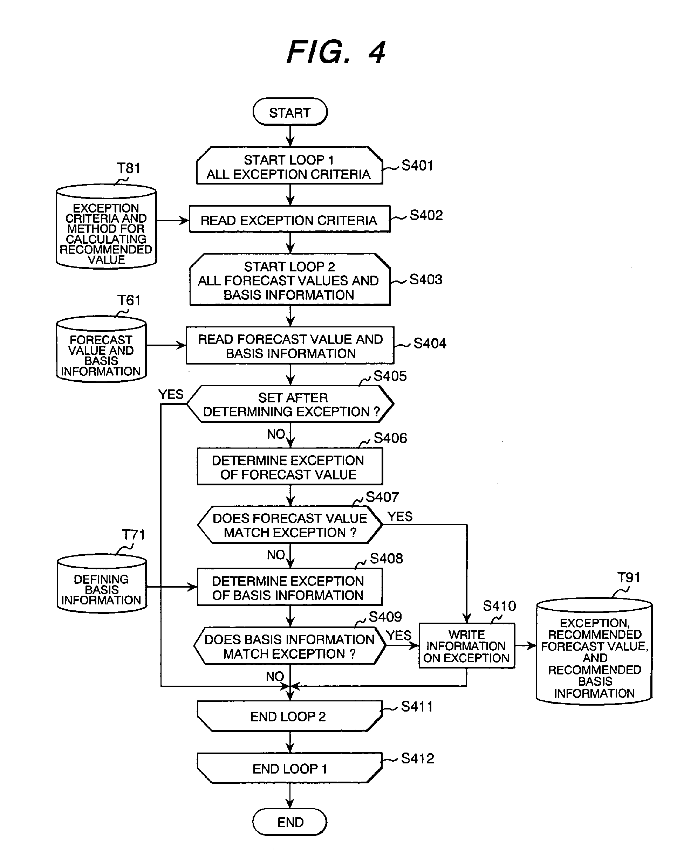

Next, a description is given of the processing for determining the exception (step S301) with reference to the flowchart shown in Fig. 4.

In this flowchart, the processing in steps S401 to S412 is repeated for the exception criteria and the recommended value calculating method stored in the table T81 for the exception criteria and the recommended calculating method.

In step S402, the basis information relation 5 (825) is read from the exception criteria 819 for the forecast value, the threshold 820 for the exception, the target basis information 817, the lowest importance 818, and the basis information relation 1 (812). Then, the processing in steps S403 to S411 is repeated for the forecast values and the basis information in the table T61 for the forecast value and the basis information.

In step S404, the forecast value and the basis information are read from the table T61 for the forecast value and the basis information. Further, in step S404, the processing is performed to read the forecast value and the basis information of the forecast sharing company 612 replaced from the forecast forming company 611, with the same product number 613 and term 614 as those of the read forecast value and basis information. The two sets of the forecast value and the basis information are the target of the determination of exception. In step S405, it is checked to determine whether or not the two sets of the forecast value and the basis information read in step S404 match the exception based on the exception criteria read in step S402. If YES in step S405, the processing routine shifts to step S411. If NO in step S405, the processing routine shifts to step S406. In step S406, it is determined whether or not the set of the forecast values 615 read in step S404 matches the exception criteria 819 for the forecast value read in step S402. In step S407, if it is determined in step S406 that the set of the forecast values 615 read in step S404 matches the exception criteria 819 for the forecast value, then the processing routine shifts to step S410. Further, in step S407, if it is determined in step S406 that the set of the forecast values 615 read in step S404 does not match the exception criteria 819 for the forecast value, then the processing routine shifts to step S408. In step S408, it is determined whether or not the set of the basis information 616 read in step S404 matches the basis information relation 5 (825), the target basis information 817, and the lowest importance 818 from the basis information relation 1 (821) read in step S402. In step S409, if YES in step S408, the processing routine shifts to step S410 and if NO in step S408, the processing routine shifts to step S411. In step S410, the information on the exception is stored in the table T91 for the exception, the recommended forecast value, and the recommended basis information.

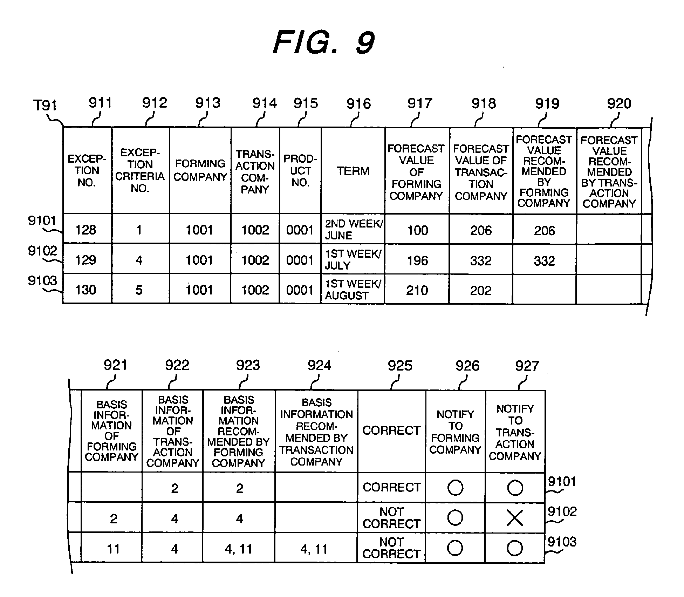

A description is given of the table T91 for the exception, the recommended forecast value, and the recommended basis information with reference to Fig. 9.

The table T91 for the exception, the recommended forecast value, the recommended basis information stores one exception and information on the recommended forecast value and the recommended basis information upon the one exception.

As the information on the exception, the table T91 for the exception, the recommended forecast value, and the recommended basis information stores an exception number 911 as an identification number of the exception formed by the forecast sharing server 11, an exception criteria number 912 for identifying the exception criteria used for the determination of the exception, a forming company 913 for forming the exception criteria, and a transaction company 914. Further, the table T91 for the exception, the recommended forecast value, and the recommended basis information stores a product number 915 indicating the product determined as the exception and a term 916 indicating the term determined as the exception.

As the information on the forecast value and the basis information determined as the exception, the table T91 for the exception, the recommended forecast value, and the recommended basis information stores a forecast value 917 of the forming company and basis information 921 of the forming company, as the forecast value and the basis information of the forming company 913, and a forecast value 918 of the transaction company and basis information 922 of the transaction company as the forecast value and the basis information of the transaction company 914. Further, the table T91 for the exception, the recommended forecast value, and the recommended basis information stores a forecast value 919 recommended by the forming company, basis information 923 recommended by the forming company, a forecast value 920 recommended by the transaction company, and basis information 924 recommended by the transaction company. Only upon calculating the forecast value 919 recommended by the forming company, the basis information 923 recommended by the forming company, and the basis information 924 recommended by the transaction company, the table T91 for the exception, the recommended forecast value, and the recommended basis information stores them and further stores nothing except for the case of calculating them.

In addition, the table T91 for the exception, the recommended forecast value, and the recommended basis information stores correct 925 indicating whether or not the automatic correction is performed, notification 926 to the forming company indicating whether or not the exception and the correction on a row of the correct 925 should be notified to the forming company, and notification 927 to the transaction company indicating whether or not the exception and the correction on the row of the correct 925 should be notified to the transaction company.

A description is given of a method using the table T91 for the exception, the recommended forecast value, and the recommended basis information in the processing.

In step S409, the table T91 for the exception, the recommended forecast value, and the recommended basis information stores the exception number 911, the exception criteria number 912, the forming company 913, the transaction company 914, the product number 915, the term 916, the forecast value 917 of the forming company, the forecast value of the transaction number 918, the basis information 921 of the forming company, the basis information 922 of the transaction company, the notification 926 to the forming company, and the notification 927 to the transaction company. Further, the table T91 for the exception, the recommended forecast value, and the recommended basis information stores "Not correct" in the correct 925. In step S303, the table T91 for the exception, the recommended forecast value, and the recommended basis information stores the forecast value 919 recommended by the forming company and the forecast value 920 recommended by the transaction company. In step S304, the table T91 for the exception, the recommended forecast value, and the recommended basis information stores the basis information 923 recommended by the forming company and the basis information 924 recommended by the transaction company. In step S307, the table T91 for the exception, the recommended forecast value, and the recommended basis information stores "Correct" in the correct 925.

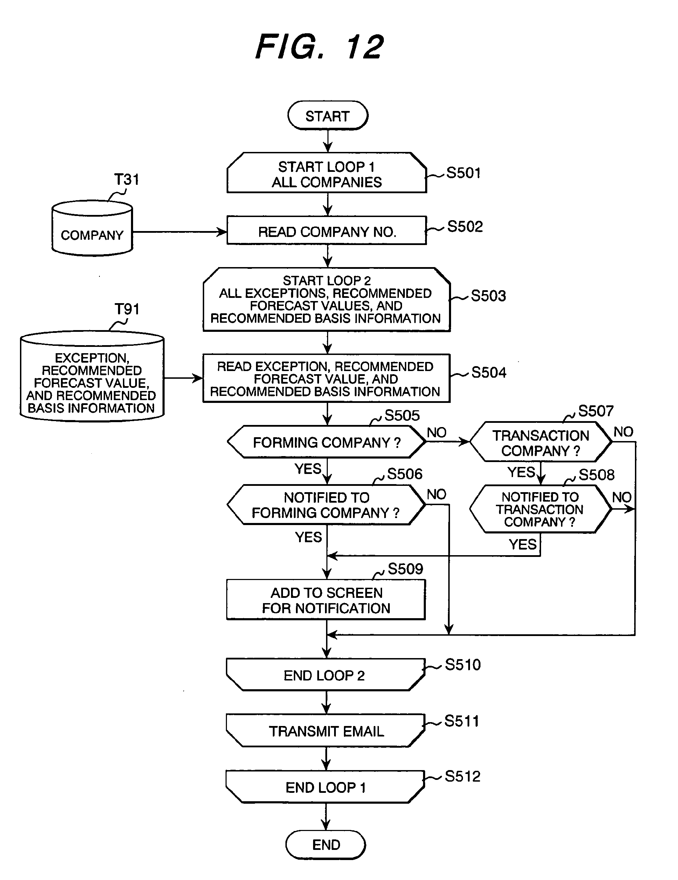

Next, a description is given of the processing for notification (step S104) with reference to the flowchart shown in Fig. 12.

In the flowchart, the processing in steps S501 to S512 is repeated for the companies stored in the table T31 for the company.

In step S502, the company number 311 is read. After reading, the processing in steps S503 to S510 is repeated for the exception, the recommended forecast value, and the recommended basis information in the table T91 for the exception, the recommended forecast value, and the recommended basis information.

In step S504, the exception, the recommended forecast value, and the recommended basis information are read from the table T91 for the exception, the recommended forecast value, and the recommended basis information. In step S505, it is determined whether or not the company number 311 read in step S502 matches the forming company 913. If YES in step S505, the processing routine shifts to step S506. If NO in step S505, the processing routine shifts to step S507. In step S506, it is determined whether or not the notification 926 to the forming company is performed. If YES in step S506, the processing routine shifts to step S509. If NO in step S506, the processing routine shifts to step S510. In step S507, it is determined whether or not the company number 311 read in step S502 matches the transaction company 914. If YES in step S507, the processing routine shifts to step S508. If NO in step S507, the processing routine shifts to step S510. In step S508, it is determined whether or not the notification 927 to the transaction company is performed. If YES in step S508, the processing routine shifts to step S509. If NO in step S508, the processing routine shifts to step S510.

In step S509, the screen 41 for notification is formed from the exception, the recommended forecast value, and the recommended basis information read in step S504.

In step S511, the email including the formed screen for notification is transmitted to the email address 312 read from the table T31 for the company read in step S502.

The screen 41 for notification displays the following information by using all the information on the exception stored in the table T91 for the exception, the recommended forecast value, and the recommended basis information.

The exception number 911 is displayed to an exception number 428. The exception criteria number 912 is displayed to an exception criteria 422. The forming company 913 is displayed to a forming company 423. The transaction company 914 is displayed to a transaction company 424. The product number 915 is displayed to a product number 425. The term 916 is displayed to a term 426. The correct 925 is displayed to a correction 427. If the correct 925 indicates "Correct", a word of "YES" is displayed to the correction 427. If the correct 925 indicates "not correct", a word of "NO" is displayed to the correction 427.

Next, if the correct 925 is "Correct", the forecast value 917 of the forming company and the forecast value 918 of the transaction company are displayed to a forecast value 4211 before correction. Further, the basis information 921 of the forming company and the basis information 922 of the transaction company are displayed to basis information 4212 before correction. The forecast value 919 recommended by the forming company and the forecast value 920 recommended by the transaction company are displayed to a forecast value 4213 after correction. The basis information 923 recommended by the forming company 923 and the basis information 924 recommended by the transaction company are displayed to basis information 4214 after correction. A link to the detailed screen 51 for the exception is displayed to a link 429.

If the correct 925 is "Not correct", the forecast value 917 of the forming company and the forecast value 918 of the transaction company are displayed to a forecast value 4311. Further, the basis information 921 of the forming company and the basis information 922 of the transaction company are displayed to basis information 4312. The forecast value 919 recommended by the forming company and the forecast value 920 recommended by the transaction company are displayed to a recommended forecast value 4313. The basis information 923 recommended by the forming company and the basis information 924 recommended by the transaction company are displayed to recommended basis information 4314.

Rows 9101, 9102, and 9103 are displayed to exceptions 421, 431, and 441, respectively. The link to the detailed screen 51 for the exception is displayed to the link 429.

The sales company terminal 12 and the purchase company terminal 13 for receiving the screen 41 for notification can view the detailed screen 51 for the exception by clicking the link 429.

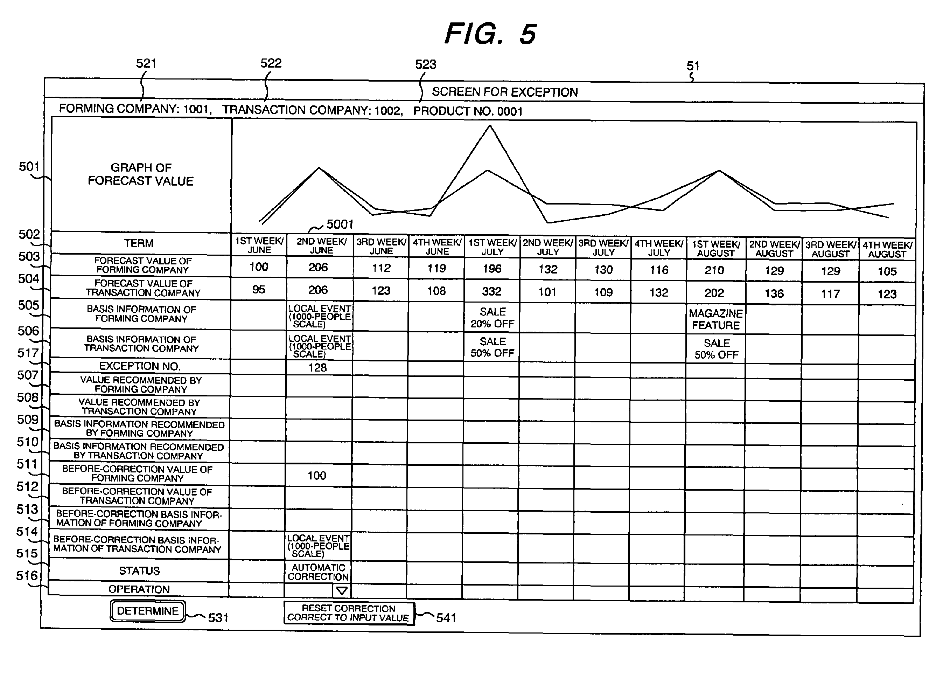

Referring to the screen 51 for the exception in Fig. 5, the processing is executed to read, from the table T91 for the exception, the recommended forecast value, and the recommended basis information, the exception, the recommended forecast value, and the recommended basis information in the row of the exception number 911 matching the exception number 428 corresponding to the link 429 clicked by the screen 41 for notification. Further, the following information is displayed by reading the forecast value and the basis information in the table T61 for the forecast value and the basis information.

The forming company 913, the transaction company 914, and the product number 915 are displayed to a forming company 521, a transaction company 522, and a product number 523, respectively.

The processing is performed to display, on time series, the forecast value 615 in the row of the forecast forming company 611 matching the forming company 521 and the transaction company 522 to a forecast value 503 of the forming company and a forecast value 504 of the transaction company for a term 502. Further, the processing is performed to display, on time series, the basis information 616 in the row of the forecast forming company 611 matching the forming company 521 and the transaction company 522 to basis information 505 of the forming company and basis information 506 of the transaction company for the term 502.

A column 5001 of the term 502 corresponding to the term 916 displays the following. That is, when the correct 925 indicates "Correct", the exception number 911 is displayed to the exception number 517. Further, the forecast value 917 of the forming company, the forecast value 918 of the transaction company, the basis information 921 of the forming company, and the basis information 922 of the transaction company are displayed to a before-correction value 511 of the forming company, a before-correction value 512 of the transaction company, a before-correction basis information 513 of the forming company, and a before-correction basis information 514 of the transaction company, respectively. The "Automatic correction" is displayed to a status 516, and a list 541 is displayed to an operation 516. Correction values are inputted to columns of the forecast value 503 of the forming company, the forecast value 504 of the transaction company, the basis information 505 of the forming company, and the basis information 506 of the transaction company. "Correct to input value" is selected from the list 541, then, a determine button 531 is pressed, and the values are corrected to the input values. "Reset correction" is selected from the list 541, then, the forecast value 615 and the basis information 616 in a corresponding row in the table T61 for the forecast value and the basis information are overwritten by using the before-correction basis information 514 of the transaction company from the before-correction value 512 of the forming value.

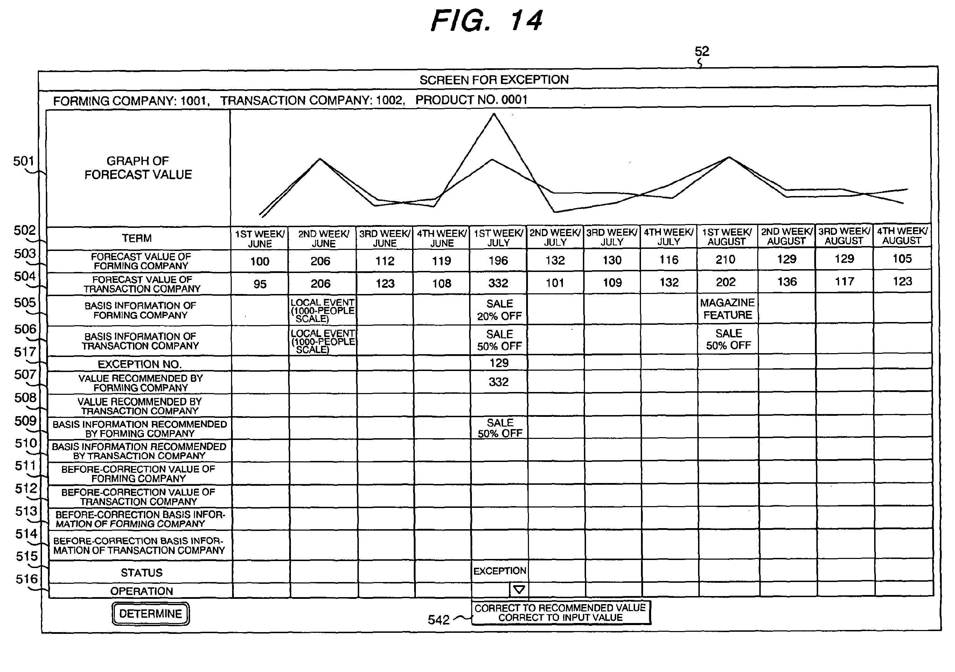

When the correct 925 indicates "Not correct", as shown on a screen 52 for the exception in Fig. 14, the exception number 911 is displayed to the exception number 517. Further, the forecast value 919 recommended by the forming company, the forecast value 920 recommended by the transaction company, the basis information 923 recommended by the forming company, and the basis information 924 recommended by the transaction company are stored in a value 508 recommended by the forming company, a value 509 recommended by the transaction company, basis information 510 recommended by the forming company, and basis information 511 recommended by the transaction company, respectively. The "Exception" is displayed to the status 516, and a list 542 is displayed to the operation 516. Correction values are inputted to columns of the forecast value 503 of the forming company, the forecast value 504 of the transaction company, the basis information 505 of the forming company, and the basis information 506 of the transaction company. "Correct to input value" is selected from the list 542, the determine button 531 is pressed and, then, the forecast value 615 and the basis information 616 in a corresponding row in the table T61 for the forecast value and the basis information are corrected to the input values. Further, "Correct to recommended value" is selected from the list 542 and, then, the forecast value 615 and the basis information 616 in a corresponding row in the table T61 for the forecast value and the basis information are overwritten by the basis information 510 recommended by the transaction company from the value 508 recommended by the forming company.

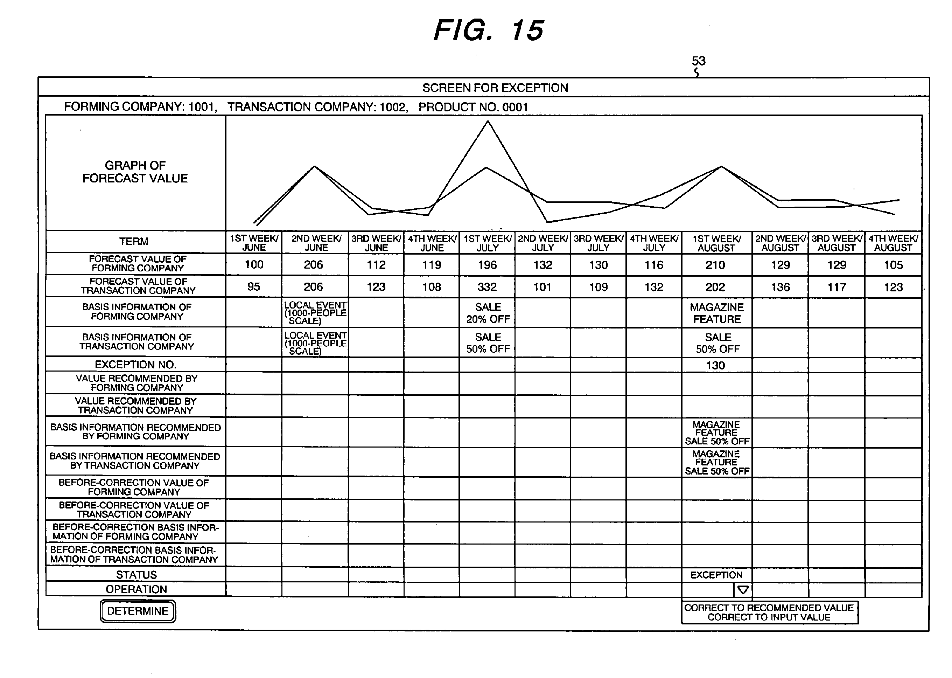

Upon clicking the link 429 on the screen 41 for notification, the screen 51 for the exception is displayed. Upon clicking a link 439, the screen 52 for the exception is displayed as shown in Fig. 14. Upon clicking a link 449, a screen 53 for the exception is displayed as shown in Fig. 15. Here, one exception, one recommended forecast value, and one piece of the recommended basis information are displayed on one screen. However, a plurality of exceptions, recommended forecast values, and pieces of recommended basis information may be displayed on one screen.

The detailed description is given of the embodiment. Hereinbelow, a description is given of a specific common forecasting method with reference to Figs. 6 to 9.

The sales company (company No. 1001) and the purchase company (company No. 1002) previously set the definitions of the basis information in rows 7101 to 7112 shown in Fig. 7. The sales company (company No. 1001) sets the exception criteria and the recommended value calculating methods in rows 8101 to 8106 shown in Fig. 8. The sales company (company No. 1001) registers the forecast values and the basis information in rows 6101 to 6112 shown in Fig. 6. The purchase company (company NO. 1002) registers the forecast values and the basis information in rows 6201 to 6212.

The forecast sharing server 11 executes the following processing sequence.

The exception criteria stored in the row 8101 is read. Based on the forming company 812, the transaction company 813, the product number 814, the start of term 815, and the end of term 816 of the exception criteria, the set of the forecast value and the basis information for the same term become the forecast value and the basis information applied to the exception criteria, among the set of forecast value and basis information of the sales company (company No. 1001) as the forecast forming company 611, the purchase company (company No, 1002) as the forecast forming company 612, the product number 613 indicating 0001, and the term of the first to fourth weeks in June and the set of forecast value and basis information corresponding to the purchase company (company No. 1002) as the forecast forming company 611, the sales company (company No. 1001) as the forecast sharing company 612, the product number 613 indicating 0001, and the term of the first to fourth weeks in July. In accordance with the applying criteria, the set of rows 6101 and 6201, the set of rows 6102 and 6202, the set of rows 6103 and 6203, and the set of rows 6104 and 6204 are detected as the forecast value and the basis information applied to the exception criteria.

The exception is determined by applying the exception criteria of the forecast value and the exception criteria of the basis information to the set of rows 6101 and 6201. Exception criteria 1 for the forecast value set by the exception criteria 819 for the forecast value is applied to a forecast value 100 in the row 6101 and a forecast value 95 in the row 6201. The exception criteria 1 correspond to "No exception" shown by the radio button 251 in Fig. 2 and, therefore, the exception is not determined. The exception criteria for the basis information correspond to a basis information relation 3 (823) in basis information relations 1 (821) to 5 (825), that is, they correspond to "basis information of forming company ⊂ basis information of transaction company (no matching)" in the check box 263 in Fig. 2. No basis information exists in the rows 6101 and 6201 and therefore no basis information relation 3 (823) is established. Thus, the exception is not determined in the rows 6101 and 6201. In the above description, since the exception is not determined in both the forecast value and the basis information, the rows 6101 and 6201 are determined to have no exception.

The exception is determined by applying the exception criteria of the forecast value and the exception criteria of the basis information to the set of rows 6102 and 6202. Exception criteria 7 for the forecast value set by the exception criteria 819 for the forecast value are applied to the forecast value 100 in the row 6102 and a forecast value 206 in the row 6202. The exception criteria 7 correspond to "|forecast value of forming company - forecast value of transaction company| ≥ threshold for exception" of the radio button 257 shown in Fig. 2. The threshold for the exception 820 is 30 and, therefore, the forecast values matches the exception criteria 7 and are determined as the exceptions. Since the forecast values are determined as the exceptions, the information on the exception is stored as shown by the row 9101 in Fig. 9. At this time point, the recommended value is not calculated and rows 919, 920, 923, and 924 are not described.

Upon determining whether or not the set of rows 6103 and 6203 and the set of rows 6104 and 6204 have the exception, they are determined to have no exception.

As mentioned above, the determination of the exception using the exception criteria in the row 8101 ends.

Upon determining the exception by use of the exception criteria in rows 8202 to 8206, the set of rows 6105 and 6205 is determined as the exception by use of the exception criteria in a row 8204, the set of rows 6109 and 6209 is determined as the exception by using the exception criteria in a row 8205, and the information on the exception is stored in the rows 9102 and 9103.

A description is given of the processing for determining the two exceptions.

The exception criteria 819 of the forecast value in the rows 8204 and 8205 indicate "No exception". Thus, the forecast values in the set of rows 6105 and 6205 and the set of rows 6109 and 6209 are not determined as the exceptions.

The basis information in the rows 6105 and 6205 is basis information K1 (importance 2) and basis information K4 (importance 4), respectively. Upon using the basis information 816 as the target in the row 8204, namely, "most important basis information" to the basis information in the rows 6105 and 6205, only the basis information K4 having importance 4 is determined to have the exception. It is determined based on the basis information relation 1 (821) in the row 8204 that exception criteria 3 for the basis information correspond to "basis information of forming company ⊂ basis information of transaction company (no matching)" in the check box 263 in Fig. 2. The basis information as the target of the forming company, that is, the row 6105 does not exist, and the basis information as the target of the transaction company, that is, the row 6205 is the basis information K4. Consequently, the basis information in the row 6205 matches the exception criteria and, thus, is determined as the exception.

The basis information in the rows 6109 and 6209 is basis information K2 (magazine feature and importance 4) and basis information K5 (sale 50% off and importance 4). Upon using the basis information 816 as the target in the row 8205, namely, "most important basis information" to the basis information in the rows 6109 and 6209, it is determined whether or not basis information K2 and the basis information K4 having the importance 4 have the exception. It is determined based on the basis information relations 1 (821) to 5 (825) in the row 8204 that exception criteria 4 and 5 for the basis information correspond to "basis information of forming company ∩ basic information of transaction company" in the check box 264 in Fig. 2 or "basis information of forming company ⊄ basic information of transaction company". When the basis information matches the exception criteria 4 or 5, it is determined as the exception. The basis information as the target of the forming company, that is, of the row 6109 is the basis information K2 and the basis information as the target of the transaction company, that is, of the row 6209 is the basis information K5. The basis information in the row 6209 matches the exception criteria 5 as "basis information of forming company ⊄ basic information of transaction company" and, therefore, it is determined as the exception.

Next, the forecast sharing server 11 forms the recommended values and automatically corrects the values, for the exceptions stored in the rows 9101 to 9103 shown in Fig. 9 with reference to the following processing routine (1) to (3).

### (1) Formation of recommended value and automatic correction for exception in row 9101

The row 8101 having the exception criteria number (exception criteria No. 1) is read from the exception criteria No. 912 (exception criteria No. 1) in the row 9101. The recommended forecast value calculating method 826 indicates 3, namely, "match forecast value of forming company to that of transaction company" corresponding to the radio button 273 shown in Fig. 2. The recommended forecast value 919 of the forming company is calculated as 206 by applying the recommended forecast calculating method 826 corresponding to the contents of the radio button 273 shown in Fig. 2 to the forecast value 917 of the forming company (forecast value: 100) and the forecast value 918 of the transaction company (forecast value: 206).

The basis information 817 as the target in the row 8101 is 3, that is, "most important basis information" by referring to the radio button 234 shown in Fig. 2. The recommended basis information calculating method 827 is 3, that is, "match basis information of forming company to that of transaction company" corresponding to the radio button 283 shown in Fig. 2. The basis information 923 recommended by the forming company is calculated as 2 by applying the basis information 817 and the recommended basis information calculating method 827 to the basis information 921 of the forming company (no basis information) and the forecast value 918 of the transaction company (basis information 2 and importance 2).

Next, since the automatic correction 828 in the row 8101 indicates "YES", the forecast value 615 in the row 6102 matching the forming company 913, the transaction company 914, the product number 915, and the term 916 in the row 9101 is overwritten by the forecast value 919 recommended by the forming company (forecast value 206).

### (2) Formation of recommended value and automatic correction for exception in row 9102

The row 8104 having the exception criteria (exception criteria No. 4) is read from the exception criteria number 912 (exception criteria No. 4) in the row 9102. The recommended forecast value calculating method 826 is 3, that is, "match forecast value of forming company to that of transaction company". The forecast value 919 recommended by the forming company is calculated as 332 by applying the recommended forecast value calculating method 826 to the forecast value 917 of the forming company (forecast value 196) and the forecast value 918 of the transaction company (forecast value 332).

The basis information 817 as the target in the row 8104 is 3, that is, "most important basis information" by referring to the radio button 234 shown in Fig. 2. The recommended basis information calculating method 827 is 3, that is, "match basis information of forming company to that of transaction company" corresponding to the radio button 283 shown in Fig. 2. The basis information 923 recommended by the forming company is calculated as 4 by applying the basis information 817 and the recommended basis information calculating method 827 to the basis information 921 of the forming company (basis information 2 and importance 2) and the forecast value 918 of the transaction company (basis information 4 and importance 4).

Since the automatic correction 828 in the row 8104 indicates "NO", the automatic correction is not performed.

### (3) Formation of recommended value and automatic correction for exception in row 9103

The row 8105 having the exception criteria (exception criteria No. 5) is read from the exception criteria number 912 (exception criteria No. 5) in the row 9103. The recommended forecast value calculating method 826 is 1, that is, "Not calculate" corresponding to the radio button 271 shown in Fig. 2 and the recommended forecast value is not calculated.

The basis information 817 as the target in the row 8105 is 3, that is, "most important basis information" by referring to the radio button 234 shown in Fig. 2. The recommended basis information calculating method 827 is 5, that is, "add basis information in at least one of both companies to that therein" corresponding to the radio button 285 shown in Fig. 2. The basis information 923 recommended by the forming company and the basis information 924 recommended by the transaction company are calculated as 4 and 12 by applying the basis information 817 and the recommended basis information calculating method 827 to the basis information 921 of the forming company (basis information 11 and importance 4) and the forecast value 918 of the transaction company (basis information 4 and importance 4), respectively.

The automatic correct 828 in the row 8105 is "NO" and therefore the automatic correction is not executed.

Finally, the forecast sharing server 11 sends a notification indicating the exception, the recommended forecast value, and the recommended basis information stored in the rows 9101 to 9103 shown in Fig. 9 to the sales company terminal 12 and the purchase company terminal 13 in accordance with the following processing routine.

The company number 311 (company No. 1001) is read from a row 3101 in the table T31 for company shown in Fig. 13, and it is searched in which row of the rows 9101 to 9103 the forming company 913 or the transaction company 914 matches the company number 311 (company No. 1001). All the forming companies 913 in the rows 9101 to 9103 indicate company No. 1001, that is, match the company number 311 in the row 3101. Then, the notification 926 to the forming company in the row 9101 is read. Since the notification 926 to the forming company in the row 9101 indicates "YES", the exception 421 shown in Fig. 10 is formed by use of columns 911 to 925. Similarly, the notification 926 to the forming company in the rows 9102 to 9103 indicates "YES", the exceptions 422 and 423 shown in Fig. 10 are formed to the rows 9102 and 9103. The above-formed screen 41 for notification is transmitted to the email address 312 (email address: mail@hanbai.co.jp) of the row 3101.

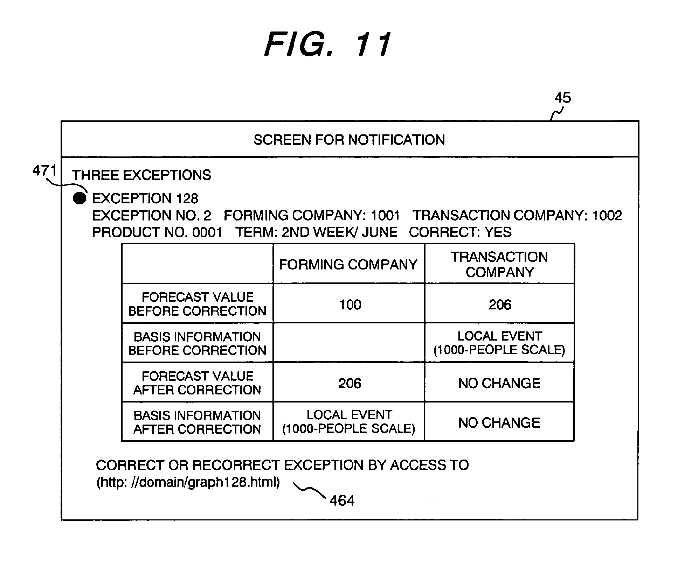

The company number 311 (company No. 1002) is read from a row 3102 in the table T31 for company shown in Fig. 13, and it is searched in which of the rows 9101 to 9103 the forming company 913 or the transaction company 914 matches the company number 311 (company No. 1002). All the transaction companies 914 in the rows 9101 to 9103 indicate company No. 1002, that is, match the company number 311 in the row 3102. Then, the notification 927 to the transaction company in the row 9101 is read. Since the notification 927 to the transaction company in the row 9101 indicates "YES", an exception 471 shown in Fig. 11 is formed by using the columns 911 to 925. The notification 926 to the forming company in the rows 9102 and 9103 indicates "NO" and therefore the information on the exception is not displayed on the screen for notification. The above-formed screen 45 for notification is transmitted to the email address 312 (email address: mail@hanbai.co.jp) of the row 3102.

The forecast sharing server 11 displays the screen 51 for the exception shown in Fig. 5 by use of the information in the table T61 for the forecast value and the basis information shown in Fig. 6 and the information in the table T91 for the exception, the recommended forecast value, and the recommended basis information shown in Fig. 9 upon clicking the link 414 or the link 464 by the sales company terminal 12 or the purchase company terminal 13.

According to the embodiment, the basis information is added to the forecast value and the exception for the basis information is determined. Thus, it is possible to find the different estimation of the future demand which is not conventionally found because the forecast values accidentally match each other. Upon determining the exception, the basis information is displayed, thereby easily specifying the factor for the exception. Further, it is possible to automatically calculate the recommended value for the correction of the forecast value and to easily correct the forecast value by use of the basis information shared by the sales company and the purchase company upon determining the exception.

The present invention produces significant effects that it is possible to provide determination of an exception so as to detect the different estimation of a future demand which is not conventionally found because the forecast values for the demand accidentally match each other, to easily specify an exception factor when the exception is determined and to easily correct the forecast value.

## Claims

1. A forecast value estimating method for estimating forecast values formed by a plurality of companies by use of a computer, said forecast value estimating method comprising:
executing one of or both of processing for determining an exception for said forecast value as a different estimation of said forecast value in which, by applying, to said forecast values formed by said companies, criteria of said exception for said forecast value for determining whether or not said forecast value matches said exception for said forecast value, it is determined whether or not said forecast value matches said exception for said forecast value, and processing for determining an exception for basis information indicating a factor for calculating the forecast values formed by the companies as a different estimation of the basis information in which, by applying, to the basis information, criteria of determining whether or not said basis information matches said exception, it is determined whether or not the basis information matches the exception; and
determining the exceptions as different estimations of forecasts formed by said plurality of companies.

2. A forecast value estimating method according to Claim 1, further comprising the steps of:
adding an importance to said basis information and;
designating said basis information by said importance in said processing for determining said exception of said basis information.

3. A forecast value estimating method according to Claim 1, further comprising the step of:
executing processing for calculating a recommended forecast value in which said recommended forecast value is calculated to correct said forecast value when determining said exception.

4. A forecast value estimating method according to Claim 1, further comprising the step of:
executing processing for calculating recommended basis information in which said recommended basis information is calculated to correct said basis information when determining said exception.

5. A forecast value estimating method according to Claim 4, further comprising the steps of:
adding an importance to said basis information; and
designating the basis information as a target of said processing for calculating the recommended basis information by the importance.

6. A forecast value estimating method according to Claim 3, further comprising the step of:
correcting said forecast value on said recommended forecast value.

7. A forecast value estimating method according to any one of Claim 4, further comprising the step of:
said basis information based on said recommended basis information.

8. A server comprising:
first storing means for storing forecast values which are forecasted by a plurality of companies;
second storing means for storing exception criteria for the forecast values, indicating criteria for determining an exception for the forecast value as a different estimation of said forecast value;
means for determining the exception criteria for said forecast value which determines the exception for said forecast value by applying said forecast value and the exception criteria for said forecast value;
third storing means for storing basis information indicating a factor for calculating the forecast values formed by the companies; and
means for determining an exception for the basis information which determines the exception for the basis information by applying exception criteria for the basis information for determining the exception of the basis information as a different estimation of the basis information.

9. A server according to Claim 8, wherein importance information indicating an importance is added to said basis information, and said means for determining the exception for the basis information designates the basis information used for the determination in accordance with said importance information.

10. A server according to Claim 8, further comprising:
means for calculating a recommended forecast value which calculate the recommended forecast value to correct said forecast value when said means for determining the exception for the forecast value determines the exception.

11. A server according to Claim 8, further comprising:
means for calculating recommended basis information which calculate the recommended basis information to correct said basis information when said means for determining said exception for the basis information determines the exception.

12. A server according to Claim 11, wherein importance information indicating an importance is added to said basis information, and said importance designates the basis information as a calculating target of said means for calculating the recommended basis information.

13. A server according to Claim 10, further comprising:
forecast-value correcting means which correct said forecast value based on said recommended forecast value.

14. A server according to Claim 11, further comprising:
basis-information correcting means which correct said basis information based on said recommended basis information.

15. A computer-executable program comprising the steps of:
executing one or both of processing for determining an exception for a forecast value as a different estimation of said forecast value in which, by applying, to said forecast values formed by said companies, criteria of said exception for said forecast value for determining whether or not said forecast value matches said exception, it is determined whether or not said forecast value matches said exception for said forecast value, and processing for determining an exception for basis information indicating a factor for calculating the forecast values formed by the companies as a different estimation of the basis information in which, by applying, to the basis information, criteria of determining whether or not said basis information matches said exception, it is determined whether or not the basis information matches the exception; and
finding a different estimation of forecasts formed by the plurality of companies.

16. A computer-executable program according to Claim 15, further comprising the step of:
executing processing for calculating a recommended forecast value to correct said forecast value in which said recommended forecast value is calculated when determining said exception.

17. A computer-executable program according to Claim 15, further comprising the step of:
executing processing for calculating recommended basis information to correct said basis information, in which said recommended basis information is calculated when determining said exception.
